## Europäisches Patentamt

## European Patent Office

## Office européen des brevets

(11) Numéro de publication: **0 223 893**
**B1**

## FASCICULE DE BREVET EUROPEEN

(45) Date de publication du fascicule du brevet: **31.10.90**

(51) Int. Cl.⁵: **E 02 B 5/08, E 03 F 5/14**

(21) Numéro de dépôt: **85450024.6**

(22) Date de dépôt: **25.11.85**

(54) Perfectionnements apportés aux filtres et dégrilleurs auto-nettoyants pour canalisations et industries diverses.

(43) Date de publication de la demande:
**03.06.87 Bulletin 87/23**

(45) Mention de la délivrance du brevet:
**31.10.90 Bulletin 90/44**

(84) Etats contractants désignés:
**AT BE CH DE FR GB IT LI LU NL SE**

(56) Documents cités:
**FR-A-2 072 964**
**FR-A-2 255 802**
**FR-A-2 286 919**
**FR-A-2 478 157**
**US-A-2 102 570**
**US-A-2 851 162**
**US-A-3 716 144**

(73) Titulaire: **Chard Hutchinson, Abel**
**16 rue Louis Piquemal**
**F-66240 Saint Estève (FR)**

(72) Inventeur: **Chard Hutchinson, Abel**
**16 rue Louis Piquemal**
**F-66240 Saint Estève (FR)**

(74) Mandataire: **Ravina, Bernard**
**Cabinet Bernard RAVINA 24, boulevard Riquet**
**F-31000 Toulouse (FR)**

Courier Press, Leamington Spa, England.

## Description

La présente invention concerne un châssis de filtres et dégrilleurs auto-nettoyants pour canalisations et industries diverses, de manière à en faciliter la fabrication, la distribution, l'installation et le service après-vente.

Les produits connus de ces types, servant au nettoyage des eaux chargées de matières en suspension, sont:

I—dans le domaine des filtres:

1—celui décrit dans le brevet de base n° 70.43827 au nom de Chard-Hutchinson (figure 1) et constitué:

a) d'un dispositif de filtrage constitué d'éléments filtrants à brins fins et souples, se chevauchant partiellement de manière à offrir une surface continue de filtrage, basculant en partie haute et butant sur un obstacle de manière à évacuer la totalité des déchets, et solidaires de barres transversales fixées, à intervalles réguliers, sur les deux chaînes latérales d'entraînement;

b) d'un mécanisme d'entraînement constitué d'un arbre moteur et d'un arbre de renvoi soutenant des pignons qui entraînent les deux chaînes latérales sur lesquelles sont fixées les éléments filtrants;

c) d'un chassis constitué de deux flasques latéraux plats reliés par des entretoises et soutenant les arbres moteur et de renvoi;

2—celui décrit dans ce même brevet (figure 1) mais constitué d'une grille (treillis) continue;

3—celui décrit dans le brevet de base n° 73.46681 et constitué d'un filtre continu avec nettoyage par de l'eau sous pression;

4—ceux commercialisés par divers fabricants en qui sont, soit du type de celui décrit en 2, soit d'un type totalement différent de ceux décrits dans les brevets de base ci-dessus par le fait qu'ils sont constitués:

a) par des cylindres grillagés d'un grand diamètre avec prise d'eau filtrée au centre de l'appareil;

b) par des treillis ou tamis plans, horizontaux et vibrants;

c) par des barreaux statiques avec système de raclage de bas en haut;

d) par des tamis courbes avec bras de raclage tournant autour d'un axe horizontal;

e) par des godets juxtaposés à barreaux.

Les produits énoncés en 4 sont réalisés selon des principes différents de ceux décrits en 1 et 2 qui sont caractérisés par leur simplicité tant de réalisation que de fonctionnement.

II—dans le domaine des dégrilleurs:

1—Celui décrit dans le brevet de base n° 80.05585 au nom de Chard-Hutchinson et constitué:

a) d'un dispositif de filtrage, constitué d'une grille à barreaux longitudinaux et de râteaux transversaux animés d'un mouvement continu, placés en amont de la grille pendant la montée et en aval de celle-ci pendant la descente, le passage aval (arrière) — amont (avant) se faisant, en partie basse, par l'intermédiaire d'un clapet, situé dans le prolongement de la grille, qui ne s'ouvre que pour laisser passer les râteaux de manière à ce que la grille offre une surface continue de filtrage;

b) d'un mécanisme d'entraînement constitué d'un arbre moteur et d'un arbre de renvoi soutenant des pignons qui entraînent deux chaînes latérales sur lesquelles sont fixés les râteaux;

c) d'un chassis constitué de deux flasques latéraux plats reliés par des entretoises et soutenant les arbres moteur et de renvoi.

La particularité de cet appareil apparaît au niveau du clapet qui permet le passage aval/amont des râteaux facilitant la réalisation d'appareils de grandes longueurs.

2—Celui décrit dans les brevets n°s 74.33887 et 75.04422, au nom de Eau-Gaz-Assainissement, constitué d'une grille à barreaux et de râteaux des types décrits en 1, mais dont la conception est totalement différente puisque les râteaux sont "aval" et non "amont/aval".

3—Celui décrit dans le brevet n° 78.09168 au nom de Eau-Gaz-Assainissement, constitué de deux grilles à barreaux situées dans deux plans décalés et se recouvrant en partie; le râteau, qui nettoie la grille de pied par l'aval et la grille principale par l'amont, est différent de celui décrit en 1:

—qui ne comporte qu'un seul plan;

—dont le passage aval/amont se fait par l'intermédiaire d'un clapet, muni ou non de dents, situé dans le prolongement du plan unique;

—qui n'a pas d'espace, après le passage du râteau, susceptible de laisser passer des matières en suspension.

Les produits énoncés en 2 et 3 sont réalisés selon des principes différents de celui décrit en 1 et qui est caractérisé par sa simplicité tant de réalisation que de fonctionnement.

La présente invention concerne un châssis de filtres et/ou dégrilleurs auto-nettoyants qui s'inspire de l'état de la technique tel qui défini dans le brevet 80 05585/2 478 157 au non de Chard Hutchinson.

A cet effet, la châssis de filtre et/ou dégrilleurs auto-nettoyants pour canalisations et industries diverses du type comportant un mécanisme d'entraînement d'éléments filtrants et/ou d'éléments de nettoyage mobiles par deux chaînes latérales à axes creux montées sur un seul arbre de renvoi; le dit châssis se caractérisant en ce que il est composé:

—de deux éléments latéraux de pied qui ont des longueurs fixes et sur lesquels est monté un arbre de renvoi,

—de deux éléments latéraux de tête qui ont des longueurs fixes et sur lesquels est monté un arbre moteur et tendeur,

—de deux éléments latéraux centraux de longueurs adaptées au génie civil, d'entretoises reliant les dits éléments, ces entretoises comprenant des entretoises assurant à la fois la jonction entre eux des éléments de tête, de pied et centraux, et l'espacement des éléments latéraux correspondants et des entretoises assurant uniquement l'espacement des éléments latéraux correspondants, toutes ces entretoises étant de longueur adaptée au génie civil.

Avec les appareils, objet de la présente invention, il est possible:

—de les fabriquer en grande partie à l'avance et de les stocker;

—de les transporter en pièce détachées;

—de les monter et de les installer, sans aucun engin spécial, d'autant plus qu'ils sont tous montés sur un support qui autorise leur basculement hors de l'eau, facilitant l'installation et surtout l'entretien.

D'autres avantages découlent de cette technique et en particulier, celui qui consisterait à utiliser, en France et à l'étranger, des installateurs agréés disposant d'un petit stock de base facilitant le commercialisation et le service après-vente correspondants.

La présente invention est maintenant décrite plus en détail à l'aide des dessins annexés, dans lesquels:

—la figure 1, est une perspective du châssis de base commun à la famille de produits objet de la présente invention;

—la figure 2, est une représentation du mécanisme d'entraînement également commun à ladite famille de produits et venant se placer dans le châssis de base;

—la figure 3, est une vue de deux panneaux filtrants pivotants montés;

—la figure 4, est une vue de l'élément tendeur de chaîne et support des dispositifs de secouage ou d'eau sous pression;

—la figure 5, est une vue partielle du dispositif de filtrage à panneaux non pivotants par verrouillage;

—la figure 6, est une vue partielle du même dispositif mais par guidage;

—la figure 7, est un schéma de principe de la réalisation et de la fixation des barreaux longitudinaux venant s'adapter sur le chassis de base;

—la figure 8, représente le râteau et sa fixation sur la chaîne d'entraînement;

—la figure 9, représente le clapet;

—la figure 10, est une vue d'ensemble sur laquelle sont représenté, partiellement, les dispositifs à panneaux et à barreaux.

Selon la réalisation préferentielle de l'invention, l'ensemble de la famille comprend:

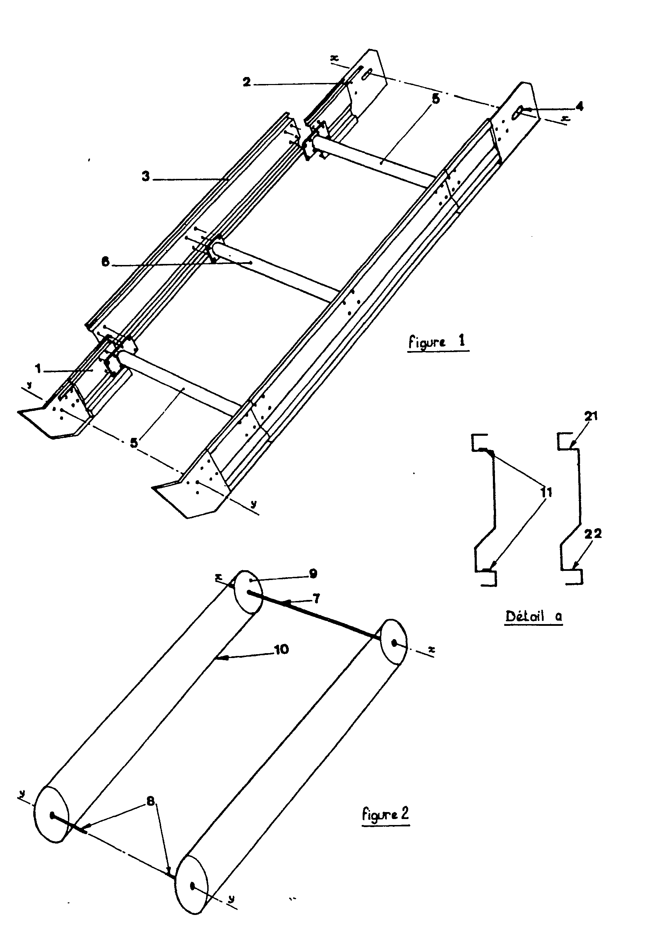

1—Un châssis commun (figure 1) constitué:

—de deux flasques latéraux gauche et droite constitués chacun:

. d'un élément de pied (1) de longueur fixe,

. d'un élément de tête (2) de longueur fixe,

. d'un élément central (3) de longueur variable, et dont les longueurs ont été déterminées pour que:

. l'élément de pied plus l'élément de tête contiennent un nombre entire d'éléments filtrants,

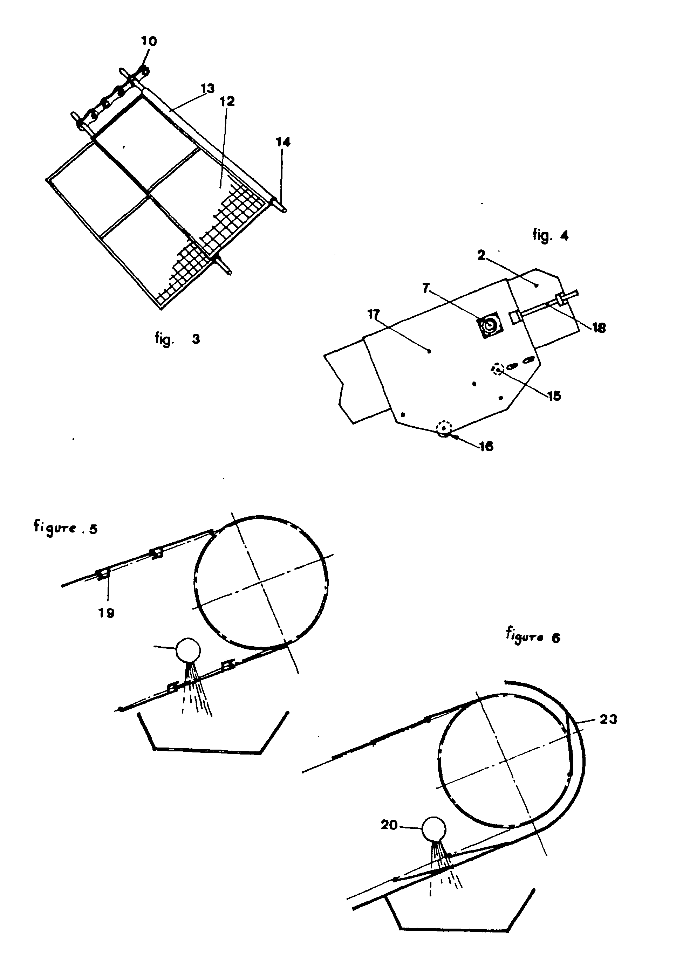

. l'élément central, quelle que soit sa longueur, contienne également un nombre entier d'éléments filtrants, à quelques millimètres près qui seront rattrapés par un dispositif (18) de réglage situé au niveau du trou ovalisé (4) et qui est représenté sur la figure 4;

—des entretoises (5) dites de "jonction" car elles assurent, outre les fonction mécaniques d'espacement et de rentfort, celle de jonction des éléments (1) (2) et (3) deux à deux;

—des entretoises (6) dites d'"espacement", dont le nombre est fonction de la longueur de l'appareil.

2—un dispositif d'entraînement commun (figure 2) constitué d'un arbre moteur (7) et d'un arbre de renvoi (8), de quatre pignons (9) et de deux chaînes d'entraînement à axes creux (10).

La particularité du dispositif d'entraînement repose dans le profil des flasques qui servent d'appui et de guide aux chaînes d'entraînement de manière à ce que les seuls éléments de l'appareil en frottement ou en contact mécanique sont:

—les rouleaux des chaînes type Sedis 55 sur le guide (11) fixé aux flasque: détail (a) de la figure 2;

—les galets des chaînes type Sedis ZM 28 directement sur les flasques en (21) et (22): détail (b) de la figure 2, de sorte qu'il n'y a absolument aucune unsure dans cet appereil autre que celle des chaînes qui fonctionnent selon leur destination, autrement dit, selon ce pourquoi elles ont été conçues; en outre, l'appareil, quelle que soit sa longueur, n'a besoin, pour fonctionner, que d'un seul arbre moteur et d'un seul arbre de renvoi.

3—Un tapis filtrant particulier (figure 3) constitué d'éléments filtrants en mouvement se présentant, par exemple, sous la forme de panneaux comprenant un treillis (12) fixé à un tube (13) dans lequel passe une tige (14) dont les extrémités viennent se loger, à intervalles réguliers, dans les trous des chaînes à axes creux. Ces panneaux se chevauchent légèrement, d'une part pour offrir une surface continue de filtrage, et s'autre part pour tenir compte de l'usure des chaînes qui a pour effet leur allongement dans le temps. Dans la réalisation préférentielle de l'invention, les panneaux filtrants sont fixés tous les cinq maillons dans le cas de la chaîne Sedis 55 au pas de 41,75 mm et tous les quatre maillons dans le cas de la chaîne Sedis ZM 28 au pas de 50, de manière à utiliser les mênes panneaux dans le deux cas. Le chevauchement des panneaux est de l'ordre de 5 à 10 mm. Lors du passage sur les pignons dont le diamètre primitif est de l'ordre de 200 mm, le chevauchement s'accentue de manière à pouvoir contourner ces derniers. Le tapis filtrant résultant est continu en amont dans son principe de filtrage mais discontinu dans sa réalisation.

4—Un dispositif de secouage particulier des éléments filtrants précédents (figure 4) caractérisé par le fait qu'il comprend:

—des galets (15) permettant un premier secouage vibratoire,

—des barres transversales (16) permettant un deuxième secouage par chocs plus importants,

—une platine (17), support des galets et des barres transversales, solidaire de l'arbre moteur (7), servant de platine tendeur grâce au dispositif (18) et venant coulisser sur l'élément de tête (2) de telle manière que les galets et les barres transversales se déplacent en même temps que l'arbre moteur évitant ainsi un quelconque réglage du dispositif de secouage.

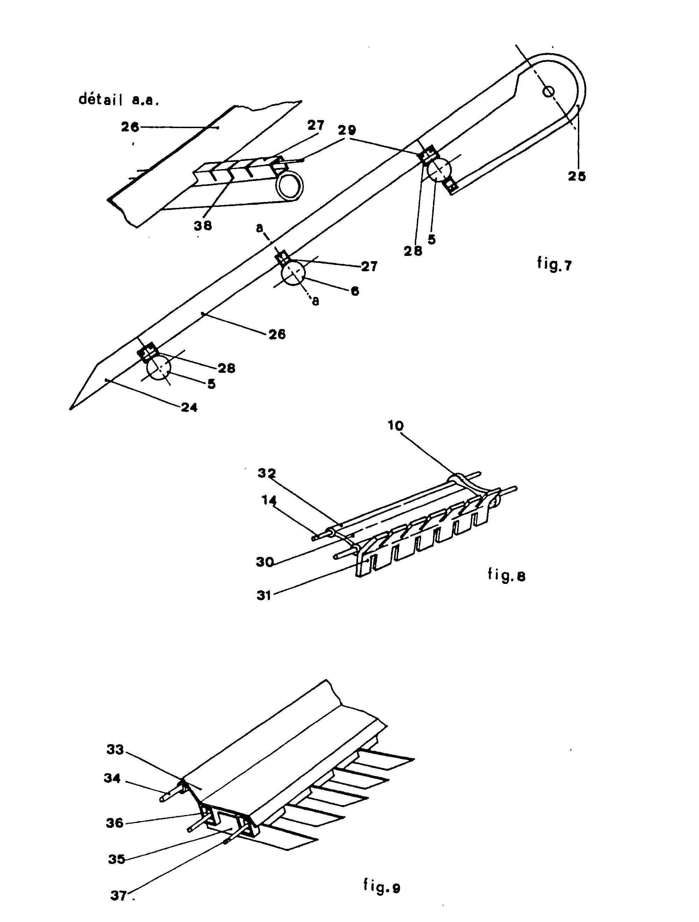

5—Un dispositif particulier (19), figure 5, permettant de transformer le tapis discontinu à éléments basculants précédent en un tapis continu dont le dispositif de nettoyage est une ou plusieurs rampes (20), avec gicleurs, d'eau sous pression. Tout en étant continu, le tapis est constitué d'éléments se décalant les uns par rapport aux autres et permettant, d'une part de s'affranchir des problèmes de tension des chaînes, et d'autre part du pas et des diamètres des pignons puisque le contournement de ces derniers se fait par chevauchement des éléments filtrants entre-eux.

Si tel n'était pas le cas, il faudrait utiliser des panneaux filtrants fixés aux deux extrémités sur la chaîne et dont les dimensions sont celles du pas de la chaîne, soit par exemple 125 mm dans le cas de l'utilisation d'une chaîne spéciale ZM 28 au pas de 125 mm. Ce système a été réalise par les établissements N.G.A.N. suite su dépôt de brevet d'invention n° 73.46681 par Monsieur Chard-Hutchinson, alors que, dans le cas présent, ces panneaux font 200 mm d'où une économie en nombre de panneaux puisque l'on s'affranchit du pas de la chaîne et que l'on peut utiliser des chaînes de fabrication courante. En outre, le tapis filtrant n'est soumis à aucun effort de traction puisque c'est la chaîne qui l'est.

Il existe une variante à cette solution, représentée sur la figure 6, où le dispositif (19) est remplacé par le guide (23) qui maintient les panneaux l'un contre l'autre où faiblement écartés.

6—Une grille à barreaux (figure 7), remplaçant le tapis filtrant précédent et constitué:

—d'un élément de pied (24) de longueur fixe, adaptée à celle de l'élément de pied (1) du châssis de base,

—d'un élément de tête (25) de longueur fixe et de forme particulière avec un retour incliné facilitant le dégagement des matières remontées par les râteaux;

—d'un élément central (26) de longueur variable fonction de la longueur de l'élément correspondant (3) du châssis de base.

Ces barreaux reposent à l'intérieur de rainures (38), définissant l'espacement des barreaux, par exemple 10, 15 ou 20 centimètres, usinées dans un profilé carré ou rectangulaire: (27) dans le cas d'un profile d'espacement, et (28) dans le cas d'un profilé de jonction; (27) est rendu solidaire de l'entretoise d'espacement (6), et (28) est rendu solidaire de l'entretoise de jonction (5), par soudage, vissage ou tout autre procédé. Les barreaux sont immobilisés longitudinalement et transversalement par l'intermédiaire de tiges (29) passant dans les profilés (27) et (28) et dans les trous correspondants usinés dans les barreaux.

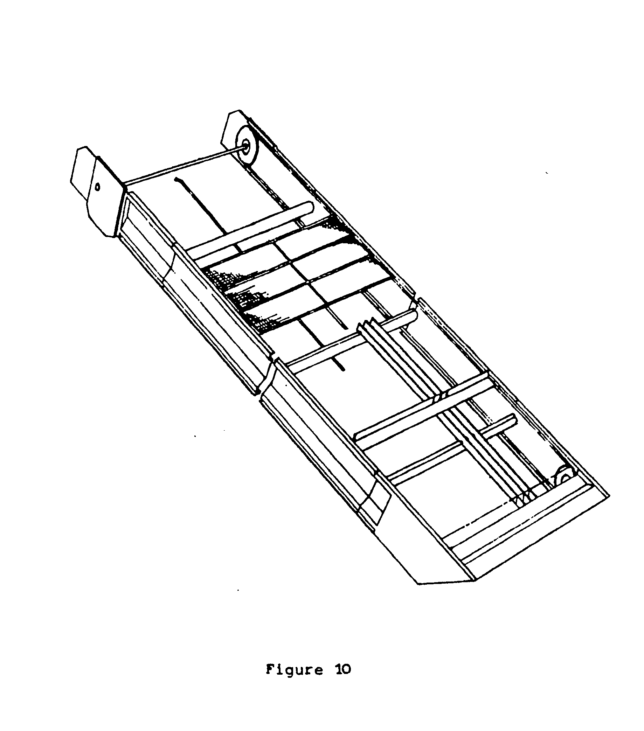

7—Des rateaux (figure 8), dégageant les barreaux des matières à évacuer et constitués:

—d'un peigne (31) dont les dents symétriques ont été découpées dans une platine et éventuellement pliées pour avoir une meilleure prise pour la remontée des matières à évacuer;

—d'un support de peigne (30) soudé à deux tubes (32), espacés d'un nombre entier de pas de chaîne, dans lesquels viennent se loger les tiges (14) qui passent également par les axes des chaînes d'entraînement.

Les rateaux sont ainsi rendus solidaires en mouvement de mécanisme d'entrînement. Ils ne frottent sur aucune partie du système, et en particulier sur les barreaux: il n'y a donc aucune usure à ce niveau. Les dents inférieures du peigne passent pendant la montée, à l'intérieur des barreaux de la grille. La partie supérieure du peigne peut ou non avoir des dents.

8—Un clapet (figure 9), pivotant autour d'une axe (34) et situé, en position fermée, dans le prolongement des barreaux de pied (24). Il autorise le passage aval/amont du rateau en partie basse de l'appareil. Dans le but de réduire le mouvement d'ouverture du clapet, il est intéressant d'avoir, d'une part, le peigne avec des dents dans sa partie supérieure, et, d'autre part, le clapet avec des encoches de manière à laisser passer les dents du peigne. La réalisation préférentielle du clapet comporte des dents (35) placées dans des rainures usinées dans le profilé (36) et verrouillées par l'intermédiaire de tiges (37) passant à l'intérieur des profilés et des trous correspondants usinés dans les dents; les profilés (36) étant fixés sur la platine (33), elle-même fixée sur l'axe (34) et libre en rotation.

La figure 10 est une vue d'ensemble de l'appareil représentant en partie haute le dispositif à panneaux filtrants et en partie basse le dispositif à barreaux et à râteaux.

Le moteur d'entraînement du système peut être un moteur à énergie électrique ou un moteur à énergie hydraulique puisant ses ressources dans le canal lui-même.

Selon diverses réalisation de l'invention:

—l'appareil pout être réalisé en acier peint, en acier galvanisé, en inox, en matière plastique armée, etc.;

—plusieurs éléments centraux peuvent être juxtaposés;

—plusieurs formes de profiles de flasques peuvent être utilisées à la condition qu'ils aient toujours un chemin de roulement montant (21) et un chemin de roulement descendant (22) pour les chaînes;

—le dispositif de verrouillage (19) peut être soudé, vissé, et réalisé selon divers principes; en particulier, il peut être un guide (23) empêchant l'écartement des panneaux filtrants;

—le nombre de galets et de barres butées peut être variable, il en est de même pour le nombre de râteaux;

—le support de barreaux peut être un profilé massif sur lequel viennent se fixer des dispositifs immobilisant les barreaux;

—le râteau peut être réalisé de différentes manières;

—les panneaux filtrants peuvent être remplacés par des panneaux pleins ou perforés, destinés au transport de produits divers (appareil horizontal ou légèrement incliné) et/ou à leur lavage, (bande transporteuse et/ou de lavage).

Il est bien entendu que la portée de l'invention n'est pas limitée à l'exemple ou aux exemples de réalisation qui ont été décrits.

L'appareil, selon l'invention, est utilisable en pisciculture, en aquaculture, en station d'épuration et dans de très nombreux types d'industries.

## Revendications

1. Châssis de filtres et/ou dégrilleurs auto-nettoyants pour canalisations et industries diverses, le dit châssis portant un mécanisme d'entraînement d'éléments filtrants et/ou d'éléments de nettoyage mobiles par deux chaînes latérales à axes creux montées sur un seul arbre moteur (7) et un seul arbre de renvoi (8) caractérisé en ce que le dit châssis est composé:

—de deux éléments latéraux de pied (1) qui ont des longueurs fixes et sur lesquels est monté un arbre de renvoi (8),

—de deux éléments latéraux de tête (2) qui ont des longueurs fixes et sur lesquels est monté un arbre moteur et tendeur (7),

—des deux éléments latéraux centraux (3) de longueurs adaptées au génie civil, d'entretoises reliant les dits éléments (1, 2, 3), ces entretoises comprenant des entretoises (5) assurant à la fois la jonction entre eux des éléments (1), (2) et (3) et l'espacement des éléments latéraux correspondants et des entretoises (6) assurant uniquement l'espacement des éléments latéraux correspondants, toutes ces entretoises (5, 6) étant de longueur adaptée an génie civil.

2. Châssis selon la revendication 1 caractérisé en ce que les éléments (1), (2) et (3) comportent, par préformage, un chemin de roulement montant (21) et un chemin de roulement descendant (22) assurant le guidage et le support des chaînes d'entraînement (10).

3. Filtre comprenant un châssis selon la revendication 2 caractérisé en ce qu'il comprend en outre un élément filtrant composé de panneaux (12), dont la largeur est sensiblement égale à un nombre entier de pas de chaîne, fixés, sur celle-ci, qu'à une seule extrémité, l'autre restant libre et reposant en chevauchant sur le panneau suivant.

4. Filtre selon la revendication 3 caractérisé en ce qu'il comprend un dispositif de nettoyage constitué de galets et de barres transversales, sur lesquels viennent buter les panneaux filtrants, lesdits galets et barres transversales étant fixés sur une platine (17) qui est solidaire en mouvement de translation, de l'arbre moteur et tendeur (7) et qui coulisse sur l'élément de tête (2).

5. Filtre selon la revendication 3 caractérisé en ce que l'élément filtrant a son extrémité libre verrouillée radialement et reste libre longitudinalement de se déplacer sur le panneau suivant.

6. Filtre selon la revendication 5 caractérisé en ce que le dispositif de nettoyage est constitué d'une ou plusieurs rampes (20) d'eau sous pression, munies de gicleurs, et directement adaptables sur la platine (17).

7. Filtre comprenant un châssis selon la revendication 1 caractérisé en ce que l'élément filtrant est une grille, constituée par des éléments de barreaux, modulaires, de pied (24) et de tête (25), de longueurs fixes, et centraux (26), de longueurs variables, comme les éléments correspondants de châssis, positionnées à intervalles réguliers grâce à des rainures (38) usinées dans des profilés transversaux d'espacement (27) ou de jonction (28), et verrouillés par des tiges passant à l'intérieur des profilés et des trous correspondants usinés dans les éléments de barreaux.

8. Filtre selon la revendication 7 caractérisé en ce que le dispositif de nettoyage est constitué d'un ou plusieurs râteaux, composés d'un peigne (31) fixés sur deux tubes (32) espacés d'un nombre entier de maillons et reliés par une platine (30), fixés sur les chaînes latérales par deux tiges (14) passant par les tubes (32) et les axes correspondants des chaînes d'entraînement (10).

9. Filtre selon les revendications 7 et 8 caractérisé en ce qu'un clapet, situé dans le prolongement des barreaux (24) de la grille, est constitué de barreaux (35) positionnés sur un profilé (36), rainuré à intervalles réguliers et verrouillés grâce à des tiges (37) passant dans le profilé (36) et dans les trous correspondants usinés dans les barreaux (35).

## Patentansprüche

1. Rahmen für selbstreinigende Filter und/oder Gitterreiniger für Kanalisationen und diverse Industriezweige, wobei besagter Rahmen einen Antriebsmechanismus der Filterelemente und/oder beweglichen Reinigungselemente trägt, mit zwei seitlichen Ketten mit hohlen Achsen, auf eine einzige Antriebswelle (7) und eine einzige Umlenkwelle (8) montiert, dadurch gekennzeichnet, daß der besagte Rahmen besteht aus:

—zwei seitlichen Fußelementen (1) mit festen Längen, auf die eine Unlenkwelle (8) montiert ist,

—zwei seitlichen Kopfelementen (2) mit festen Längen, auf die eine Antrieb- und Spannwelle montiert ist,

—zwei mittleren Seitenelementen (3), deren Längen den Bauarbeiten angepaßt sind, und aus Anstandsteilen, die die besagten Elemente (1, 2, 3) miteinander verbinden, wobei diese Abstandsteile Abstandsteile (5) enthalten, die die Elemente (1), (2) und (3) verbinden und gleichzeitig die entsprechenden Seitenelemente im Abstand zueinander halten, und Abstandsteile (6), die nur für den Abstand der entsprechenden seitlichen Teile zueinander sorgen, wobei alle diese Abstandsteile (5, 6) den Bauarbeiten angepaßt sind.

2. Rahmen gemäß Anspruch 1, dadurch gekennzeichnet, daß die Elemente (1), (2) und (3) durch Verformung einen aufsteigenden Rollweg (21) und einen absteigenden Rollweg (22) enthalten, die die Führung und Halterung der Antriebsketten übernehmen.

3. Filter mit einem Rahmen gemäß Anspruch 2, dadurch gekennzeichnet, daß er außerdem ein Filterelement enthält, das aus Feldern (12) besteht, deren Breite im Wesentlichen einer ganzen Anzahl Kettenteilungen entspricht, nur an einem Ende an der Kette befestigt, während das andere frei bleibt und überstehend auf dem nächsten Feld aufliegt.

4. Filter gemäß Anspruch 3, dadurch gekennzeichnet, daß er ein Reinigungselement enthält, aus Rollen und Querstangen bestehend, an denen die Filterfelder anschlagen, wobei besagte Rollen und Querstäbe auf einer Platine (7) befestigt sind, die in der Fahrbewegung mit der Antrieb- und Spannwelle (7) verbunden ist, die auf dem Kopfteil (2) gleitet.

5. Filter gemäß Anspruch 2, dadurch gekennzeichnet, daß das Filterelement an seinem freien Ende radial verriegelt ist und sich in Längsrichtung auf dem nächsten Feld frei bewegen kann.

6. Filter gemäß Anspruch 5, dadurch gekennzeichnet, daß die Reinigungsvorrichtung aus einer oder mehreren Rampen (20) besteht, die Wasser unter Druck führen und mit Spritzdüsen versehen sind, und die sich direkt auf der Platine (17) einbauen lassen.

7. Filter mit einem Rahmen gemäß Anspruch 1, dadurch gekennzeichnet, daß das Filterelement ein Gitter ist, das aus Stabelementen besteht, in Modulbauweise, mit Fuß (24) und Kopf (25), mit festen Längen, und aus zentralen Elementen (26), mit veränderlichen Längen, wie die entsprechenden Elemente des Rahmens, durch Nuten (38) in regelmäßigen Abständen positioniert, die in die Abstandsprofile in Querrichtung (27) oder in die Verbindungsteile (28) eingearbeitet sind, und die durch Stangen verriegelt sind, welche innen durch die Profile geführt und in die in die Stabelemente eingearbeiteten entsprechenden Löcher eingesetzt sind.

8. Filter gemäß Anspruch 7, dadurch gekennzeichnet, daß die Reinigungsvorrichtung aus einem oder mehreren Rechen besteht, aus einem Kamm (31) bestehend, auf zwei entgegengesetzten Rohren (32) einer ganzen Anzahl Kettenglieder befestigt und mit einer Platine (30) verbunden, auf den seitlichen Ketten mit zwei Stangen (14) befestigt, die durch die Rohre (32) und die entsprechenden Achsen der Antriebsketten (10) führen.

9. Filter gemäß Anspruch 7 und 8, dadurch gekennzeichnet, daß ein Klappe in der Verlängerung der Stäbe (24) des Gitters aus Stäben (35) gebildet wird, die auf einem Profil (36) positioniert werden, das in regelmäßigen Abständen mit Nuten versehen und mit Stangen (37) verriegelt ist, die durch das Profil (36) geführt und in die entsprechenden, in die Stäbe (35) eingearbeiteten Löcher eingesetzt sind.

## Claims

1. Self-cleaning filter and/or screen frame for ducts and various industries, said frames having a filter element and/or mobile cleaning element drive mechanism with two hollow-pin lateral chains installed on a single driving shaft (7) and a single countershaft (8) characterized in that the said frame is composed of:
—two lateral base elements (1) with fixed lengths and on which is installed a countershaft (8),
—two lateral top elements (2) with fixed lengths and on which is installed a driving shaft and tension device (7),
—two center lateral elements (3) adapted to civil engineering lengths, spacers connecting the said elements (1, 2, 3), these spacers comprising spacers (5) ensuring both the junction of elements (1), (2) and (3) between themselves and the spacing of the corresponding lateral elements and spacers (6) ensuring only the spacing of the corresponding lateral elements, with all these spacers (5, 6) being of a length adapted to civil engineering.

2. Frame according to claim 1 characterized in that the elements (1), (2) and (3) comprise, by preforming, an upward raceway (21) and a downward raceway (22) which guide and support the drive chains (10).

3. Filter comprising a frame according to claim 2 characterized in that it also includes a filter element composed of panels (12) the width of which is practically equal to a whole number of chain pitches, fixed on the latter at one end with the other end remaining free and overlapping on the next panel.

4. Filter according to claim 3 characterized in that it includes a cleaning device composed of rollers and transverse bars, against which abut the filter panels, said rollers and bars being fixed to a plate (17) which follows the translational motion of the driving shaft and tension device and which slides with the top element (2).

5. Filter according to claim 3 characterized in that the filter element has its free end locked radially and remains free longitudinally to move onto the next panel.

6. Filter according to claim 5 characterized in that the cleaning device is composed of one or more ramps (20) of pressurized water, equipped with nozzles, and directly adaptable on the plate (17).

7. Filter including a frame according to claim 1 characterized in that the filter element is a grid composed of bar, modular, base (24) and top (25) elements of fixed length and central elements (26) of variable length, like the corresponding frame elements, positioned at regular intervals by means of grooves (38) machined in spacing (27) or junction (28) transverse formed sections and locked by rods going through the inside of the formed sections and corresponding holes machined in the bar elements.

8. Filter according to claim 7 characterized in that the cleaning device is composed of one or more rakes, composed of a comb (31) fixed on two tubes (32) spaced at a whole number of links and connected by a plate (30), attached on the lateral chains by two rods (14) going through the tubes and the corresponding drive chain (10) pins.

9. Filter according to claims 7 and 8 characterized in that a flap, located in the projection of the bars (24) of the grid is composed of bars (35) positioned on a formed section (36), grooved at regular intervals and locked by means of rods (37) going through the formed section (36) and the corresponding holes machined in the bars (35).

figure 1

figure 2

Détail a

fig. 4

2

7

17

18

15

16

fig. 3

10

13

12

14

figure . 5

19

figure 6

23

20

détail a.a.

fig.7

fig.8

fig.9

Figure 10